# FASCICULE DE BREVET EUROPEEN

(11) **EP 0 524 879 B1**
(45) Date de publication et mention de la délivrance du brevet: **02.11.1995**
(21) Numéro de dépôt: 92402117.3
(22) Date de dépôt: 22.07.1992
(51) Int. Cl.: F16B 37/04, F16B 37/02

(54) **Dispositif de fixation d'au moins deux organes l'un sur l'autre**
Befestigungsvorrichtung für wenigstens zwei aufeinanderliegende Teile
Fastening for at least two elements lying one upon the other

(30) Priorité: 26.07.1991 FR 9109538
(43) Date de publication de la demande: 27.01.1993
(73) Titulaire: TECH INDUSTRIES, Société anonyme, F-18160 Chezal-Benoit (FR)
(72) Inventeur: Dubost, Dominique, F-78170 La Celle Saint Cloud (FR)
(74) Mandataire: Habasque, Etienne Joel Jean-François

(56) Documents cités:
- DE-C- 822 010
- FR-A- 1 429 545
- FR-A- 2 351 297

## Description

La présente invention concerne un dispositif de fixation d'au moins deux organes l'un sur l'autre.

Plus particulièrement, l'invention se rapporte à des dispositifs de fixation de deux organes à l'aide d'une vis et d'un écrou transfert, adaptés pour s'engager dans des évidements desdits organes.

On connaît déjà dans l'état de la technique, par exemple du document FR-A-2 351 297, des dispositifs de ce type dans lesquels l'écrou transfert est fixé à l'extrémité de branches d'un organe de fixation, ces branches étant déformables lors du serrage de cet écrou sur la vis pour venir en butée contre une surface d'appui de l'un des organes afin d'assurer le maintien en position de cet écrou et la fixation des organes l'un sur l'autre.

Cependant, ces dispositifs présentent un certain nombre d'inconvénients, du fait de la complexité de leur structure et de leur prix de revient.

On connait également dans l'état de la technique, par exemple du document FR-A-1 429 545, un écrou borgne constitué par un corps formant l'écrou proprement dit, fileté intérieurement, et par une cage en matière élastique de faible épaisseur, caractérisé en ce que la cage présente des pattes élastiques expansibles disposées et conformées de façon à s'engager dans des évidements ou entailles ménagés dans une bride du corps de l'écrou et à réaliser un ancrage sur le bord du trou du fait du déplacement axial de ce corps de l'écrou lors du serrage de ce dernier, le point de courbure des pattes portées par la cage étant situé vers l'extérieur à une distance telle du trou de la cage destinée à la vis que les pattes soient inclinées et aillent en divergeant en direction du corps de l'écrou, le diamètre de leur périphérie étant, à l'état non serré, inférieur au diamètre du trou.

Cependant, cet écrou borgne présente un certain nombre d'inconvénients, car il ne reste pas en position lorsqu'on enlève la vis.

Le but de l'invention est donc de résoudre ces problèmes en proposant un dispositif de fixation qui soit simple, fiable, facile à mettre en oeuvre et dont le prix de revient soit le plus faible possible.

A cet effet, l'invention a pour objet un dispositif de fixation d'au moins deux organes l'un sur l'autre, à l'aide d'une vis et d'un écrou transfert, adaptés pour s'engager dans des évidements desdits organes, l'écrou transfert comportant une plaque d'écrou comprenant un trou taraudé de part et d'autre duquel sont ménagées des zones de passage de branches d'un organe d'accrochage de section de forme générale en U évasé, dont la portion intermédiaire comporte un trou de passage de la vis en regard du trou taraudé de la plaque d'écrou, et est adaptée pour s'appuyer contre une surface de butée de la vis ou de l'organe sur lequel s'appuie cette vis, de manière que l'écrou provoque un écartement des branches de l'organe et leur venue en butée contre une surface d'appui de l'autre organe lors du vissage, pour fixer les organes l'un sur l'autre.

Selon l'invention, la plaque d'écrou comporte deux portions décalées axialement, l'une interne, dans laquelle est ménagé le trou taraudé et l'autre externe, s'étendant au moins en partie autour de la portion interne et adaptée pour venir en butée contre une surface d'appui de l'autre organe, opposée à celle sur laquelle les branches de l'organe d'accrochage viennent en butée, pour permettre le maintien en position de l'écrou par pincement de l'autre organe entre cette portion externe de la plaque d'écrou et les branches de l'organe d'accrochage.

Selon un mode de réalisation, en position non serrée de l'écrou, les branches de l'organe d'accrochage présentent successivement à partir de la portion intermédiaire de celui-ci, une première partie droite s'éloignant de l'axe de l'écrou, une seconde partie courbée en direction opposée à l'axe de l'écrou, engagée dans une zone correspondante de la plaque d'écrou et une troisième partie repliée en direction de l'axe de l'écrou.

L'invention sera mieux comprise à l'aide de la description qui va suivre, donnée uniquement à titre d'exemple et faite en se référant aux dessins annexés, sur lesquels :
- la Fig.1 représente une vue en coupe d'un dispositif de fixation selon l'invention, en position non serrée de l'écrou;
- la Fig.2 représente une vue de côté de l'écrou représenté sur la Fig.1;
- la Fig.3 représente une vue en coupe d'un dispositif de fixation selon l'invention, en position serrée de l'écrou, et
- la Fig.4 représente une vue en perspective d'une variante de réalisation d'un écrou entrant dans la constitution d'un dispositif de fixation selon l'invention.

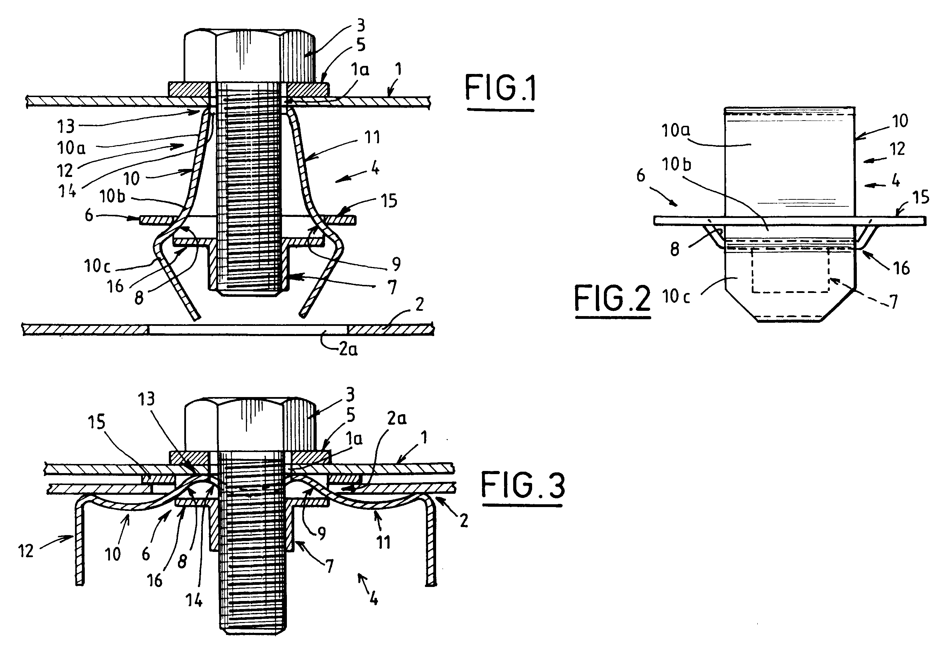

Ainsi qu'on peut le voir sur les figures 1 à 3, un dispositif de fixation selon l'invention peut être utilisé pour fixer deux organes l'un sur l'autre. Ces organes sont désignés par les références générales 1 et 2 sur ces figures.

Ces organes se présentent par exemple sous la forme de panneaux.

Le dispositif de fixation selon l'invention comporte de manière connue en soi, une vis 3 et un écrou transfert 4.

Cette vis et cet écrou sont adaptés pour s'engager dans des évidements respectivement 1a, 2a des organes 1 et 2. La vis 3 peut par exemple être associée à une rondelle 5 en appui sur une face correspondante de l'un des organes.

Selon l'invention et ainsi qu'on peut le voir sur ces figures, l'écrou transfert 4 comporte une plaque d'écrou 6 comprenant un trou taraudé 7 de part et d'autre duquel sont ménagées des zones 8 et 9 de passage de branches 10 et 11 d'un organe d'accrochage 12, de section de forme générale en U évasé, dont la portion intermédiaire 13 comporte un trou de passage 14 de la vis, en regard du trou taraudé 7 de la plaque d'écrou.

Comme on peut le voir en particulier sur les figures 1 et 3, cette portion intermédiaire 13 de l'organe d'accrochage 4 est adaptée pour s'appuyer contre une surface de butée de la vis, constituée par exemple par la rondelle 5, ou de l'organe 1 sur lequel s'appuie cette vis, de manière que l'écrou provoque un écartement des branches 10,11 de l'organe d'accrochage et leur venue en butée contre une surface d'appui de l'autre organe 2, lors du vissage, pour fixer les organes l'un sur l'autre comme cela sera décrit plus en détail par la suite.

Dans le mode de réalisation représenté sur ces figures 1 à 3, la plaque d'écrou 6 comporte deux portions 15 et 16 décalées axialement, l'une interne, 16, dans laquelle est ménagé le trou taraudé 7 et l'autre externe, 15, s'étendant autour de la portion interne, les zones 8 et 9 de passage des branches de l'organe d'accrochage étant formées par des fentes ménagées entre ces deux portions.

Dans le mode de réalisation illustré, en position non serrée de l'écrou, les branches par exemple 10 de l'organe d'accrochage 12 présentent successivement à partir de la portion intermédiaire 13 de cet organe, une première partie droite 10a s'éloignant de l'axe de l'écrou, une seconde partie 10b courbée en direction opposée à l'axe de l'écrou, cette partie étant engagée dans une fente correspondante 8 de la plaque d'écrou 6 et enfin une troisième partie 10c repliée en direction de l'axe de l'écrou.

Avantageusement, cette troisième partie de chaque branche de l'organe d'accrochage est repliée à peu près à 90° par rapport à l'extrémité correspondante de la seconde partie de celle-ci.

Le montage de ce dispositif s'opère par exemple de la façon suivante.

La vis 3 est tout d'abord introduite dans l'évidement 1a de l'organe 1, de manière que la rondelle d'appui 5 ou la tête de la vis 3, vienne en contact contre la face correspondante de cet organe.

Ensuite, l'écrou transfert 4 est disposé autour de cette vis 3, de manière que la portion intermédiaire 13 de l'organe d'accrochage 12, vienne en appui contre la face correspondante de l'organe 1 ou de la rondelle d'appui 5 (ou directement de la tête de la vis si celle-ci n'est pas associée à une rondelle), selon la taille de l'évidement 1a de l'organe 1.

Cet ensemble organe 1 - vis 3 - écrou 4 est ensuite déplacé de manière que l'écrou transfert 4 soit introduit dans l'évidement 2a de l'organe 2 à fixer et que les deux organes soient plaqués l'un contre l'autre.

Il est à noter à cet égard que la portion externe 15 de la plaque d'écrou 6 est interposée entre les deux organes pour former par exemple une entretoise d'écartement et est en butée contre une surface d'appui du second organe 2, opposée à celle sur laquelle les branches de l'organe d'accrochage viennent en appui.

Une fois cette position atteinte, il suffit alors de faire tourner la vis 3 pour faire remonter l'écrou 7 le long de celle-ci, ce qui provoque l'écartement par déformation, des branches 10 et 11 de l'organe d'accrochage 12 jusqu'à ce que celles-ci et plus particulièrement les zones de pliage entre les secondes parties et les troisièmes parties de celles-ci, viennent en appui contre la face correspondante de l'organe 2 pour assurer la fixation de ces organes l'un sur l'autre.

Il est à noter que le premier organe 1 peut comporter de manière avantageuse des moyens de blocage de l'organe d'accrochage ou de la plaque d'écrou en position, empêchant ceux-ci de tourner lors de la rotation de la vis 3. Ces moyens de blocage sont constitués par tout moyen approprié, comme par exemple une partie en saillie de cet organe.

Lors du démontage, il suffit de retirer la vis, l'écrou transfert 4 restant en position sur le second organe 2 par pincement de celui-ci entre la portion externe 15 de la plaque d'écrou 6 et les parties correspondantes des branches 10 et 11 de l'organe d'accrochage 12.

La plaque d'écrou 6 et l'organe d'accrochage 12 peuvent être réalisés par cisaillage et emboutissage de plaques de tôle.

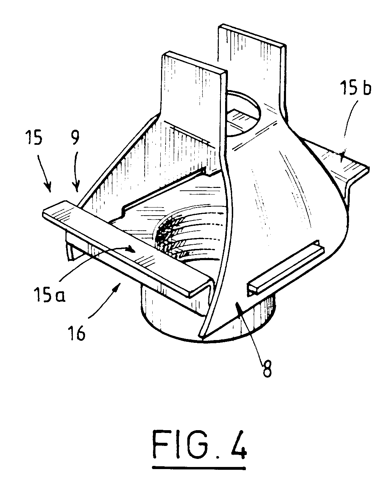

Selon un autre mode de réalisation représenté sur la Fig.4, la portion externe 15 de la plaque d'écrou comporte deux ailes opposées 15a et 15b, décalées angulairement (par exemple de 90°) par rapport aux zones 8 et 9 de passage des branches de l'organe d'accrochage.

Ces ailes permettent toujours de maintenir l'écrou en position sur le second organe par pincement de celui-ci entre la portion externe de la plaque d'écrou et les branches de l'organe déformable.

Dans cet exemple, les branches de l'organe d'accrochage sont adaptées pour coopérer dans les zones de passage 8 et 9, avec les bords correspondants de la portion interne 16 de la plaque d'écrou, lors du vissage, pour leur déformation.

## Revendications

1. Dispositif de fixation d'au moins deux organes l'un sur l'autre, à l'aide d'une vis (3) et d'un écrou transfert (4), adaptés pour s'engager dans des évidements (1a,2a) desdits organes (1,2), l'écrou transfert (4) comportant une plaque d'écrou (6) comprenant un trou taraudé (7) de part et d'autre duquel sont ménagées des zones (8,9) de passage de branches (10,11) d'un organe d'accrochage (12) de section de forme générale en U évasé, dont la portion intermédiaire (13) comporte un trou de passage (14) de la vis (3) en regard du trou taraudé (7) de la plaque d'écrou (6) et est adaptée pour s'appuyer contre une surface de butée de la vis (3) ou de l'organe (1) sur lequel s'appuie cette vis, de manière que la plaque d'écrou provoque un écartement des branches (10,11) de l'organe d'accrochage (12) et leur venue en butée contre une surface d'appui de l'autre organe (2) lors du vissage, pour fixer les organes l'un sur l'autre, caractérisé en ce que la plaque d'écrou (6) comporte deux portions décalées axialement (15,16), l'une interne (16) dans laquelle est ménagé le trou taraudé (7) et l'autre externe (15) s'étendant au moins en partie autour de la portion interne et adaptée pour venir en butée contre une surface d'appui de l'autre organe, opposée à celle contre laquelle les branches de l'organe d'accrochage viennent en butée, pour permettre un maintien en position de l'écrou par pincement de l'autre organe entre cette portion externe de la plaque d'écrou et les branches de l'organe d'accrochage.

2. Dispositif selon la revendication 1, caractérisé en ce que la portion externe (15) entoure la portion interne (16) et en ce que les zones de passage des branches de l'organe déformable comprennent des fentes (8,9) de passage ménagées entre ces deux portions.

3. Dispositif selon la revendication 1, caractérisé en ce que la portion externe (15) de la plaque d'écrou comporte au moins deux ailes opposées (15a,15b), décalées angulairement par rapport aux zones (8,9) de passage des branches de l'organe d'accrochage.

4. Dispositif selon la revendication 1, 2 ou 3, caractérisé en ce qu'en position non serrée de l'écrou, les branches de l'organe d'accrochage (12) présentent successivement à partir de la portion intermédiaire (13) de celui-ci, une première partie droite (10a) s'éloignant de l'axe de l'écrou, une seconde partie (10b) courbée en direction opposée à l'axe de l'écrou, engagée dans une zone (8,9) correspondante de la plaque d'écrou (6) et une troisième partie (10c) repliée en direction de l'axe de l'écrou.

5. Dispositif selon la revendication 4, caractérisé en ce que la troisième partie (10c) de chaque branche (10,11) de l'organe d'accrochage (12) est repliée à peu près à 90° par rapport à l'extrémité correspondante de la seconde partie (10b) de celle-ci.

6. Dispositif selon l'une quelconque des revendications précédentes, caractérisé en ce que la plaque d'écrou (6) et l'organe d'accrochage (12) sont réalisés par cisaillage et emboutissage de plaques de tôle.

## Claims

1. Device for securing at least two members one to the other, by means of a screw (3) and a transfer nut (4) which are adapted to engage in recesses (1a, 2a) of the said members (1, 2), the transfer nut (4) comprising a nut plate (6) which has a tapped hole (7) on each side of which are arranged areas (8, 9) for the passage of the arms (10, 11) of an engaging member (12) which has a cross-section in the general form of a flared U and of which the intermediate portion (13) comprises a passage hole (14) for the screw (3) opposite the tapped hole (7) of the nut plate (6) and is adapted to rest against an abutment surface of the screw (3) or of the member (1) on which the screw rests, in such a manner that the nut plate causes the arms (10, 11) of the engaging member (12) to move apart and abut a support surface of the other member (2) during the screwing operation, in order to secure the members one to the other, characterised in that the nut plate (6) comprises two axially offset portions (15, 16), one (16) of which is internal and in which the tapped hole (7) is formed and the other (15) of which is external and extends at least in part around the internal portion and is adapted to abut a support surface of the other member, opposite the support surface abutted by the arms of the engaging member, in order to enable the nut to be held in position by clamping the other member between the external portion of the nut plate and the arms of the engaging member.

2. Device according to Claim 1, characterised in that the external portion (15) surrounds the internal portion (16) and in that the areas far the passage of the arms of the deformable member comprise passage slots (8, 9) formed between those two portions.

3. Device according to Claim 1, characterised in that the external portion (15) of the nut plate comprises at least two opposing wings (15a, 15b) which are offset in an angular manner relative to the areas (8, 9) for the passage of the arms of the engaging member.

4. Device according to Claim 1, 2 or 3, characterised in that, when the nut is in the untightened position, the arms of the engaging member (12) have, in succession and starting from the intermediate portion (13) of that member, a straight first portion (10a) moving away from the axis of the nut, a second portion (10b) which is curved in the opposite direction to the axis of the nut and is engaged in a corresponding area (8, 9) of the nut plate (6), and a third portion (10c) which is bent back in the direction of the axis of the nut.

5. Device according to Claim 4, characterised in that the third portion (10c) of each arm (10, 11) of the engaging member (12) is bent back at approximately 90° relative to the corresponding end of the second portion (10b) of the arm.

6. Device according to any one of the preceding claims, characterised in that the nut plate (6) and the engaging member (12) are produced by cutting and stamping sheet metal plates.

## Patentansprüche

1. Vorrichtung zum Befestigen wenigstens zweier aufeinanderliegender Teile, mit Hilfe einer Schraube (3) und einer Übertragungsmutter (4), dazu ausgelegt, daß sie in Ausnehmungen (1a, 2a) der Teile (1, 2) greifen können, wobei die Übertragungsmutter (4) eine Plattenmutter (6) aufweist, welche ein mit Gewinde versehenes Loch (7) umfaßt, wobei auf dessen beiden Seiten Bereiche (8, 9) für den Durchlaß von Schenkeln (10, 11) eines Mitnahmeteils (12) mit einem Querschnitt in allgemeiner Form eines nach oben erweiterten U versehen sind, dessen Zwischenteil (13) ein Durchgangsloch (14) für die Schraube (3) gegenüber dem mit Gewinde versehenen Loch (7) der Plattenmutter (6) aufweist und dazu ausgelegt ist, sich gegen eine Anlagefläche der Schrauben (3) oder des Teils (1), auf dem die Schraube aufliegt, anlegt, derart, daß die Plattenmutter eine Beabstandung der Schenkel (10, 11) des Mitnahmeteils (12) und ihr in Anlage Kommen gegen eine Anlagefläche des Anlageteils (2) beim Verschrauben hervorruft, um die Teile aufeinander zu befestigen, dadurch gekennzeichnet, daß die Plattenmutter (6) zwei axial versetzte Abschnitte (15, 16) aufweist, der eine ein innerer (16), in dem das mit Gewinde versehene Loch (7) untergebracht ist, und der andere ein äußerer (15), der sich wenigstens teilweise um den inneren Abschnitt erstreckt und dazu ausgelegt ist, in Anlage gegen eine Anlagefläche des anderen Teils zu kommen, gegenüber derjenigen, gegen die die Schenkel des Mitnahmeteils in Anlage kommen, um ein Halten der Mutter in ihrer Position durch Klemmen des anderen Teils zwischen diesem äußeren Abschnitt der Plattenmutter und den Schenkeln des Mitnahmeteils zu ermöglichen.

2. Vorrichtung nach Anspruch 1, dadurch gekennzeichnet, daß der äußere Abschnitt (15) den inneren Abschnitt (16) umgibt und daß die Bereiche für den Durchlaß der Schenkel des verformbaren Organs Durchlaßschlitze (8, 9) aufweisen, die zwischen diesen beiden Abschnitten vorgesehen sind.

3. Vorrichtung nach Anspruch 1, dadurch gekennzeichnet, daß der außere Abschnitt (15) der Plattenmutter wenigstens zwei einander gegenüberliegende Flügel (15a, 15b) umfaßt, die winkelmäßig in bezug auf die Bereiche (8, 9) für den Durchlaß der Schenkel des Mitnahmeteils versetzt sind.

4. Vorrichtung nach Anspruch 1, 2 oder 3, dadurch gekennzeichnet, daß in der Nicht-Klemmposition der Mutter die Schenkel des Mitnahmeteils (12) infolge ausgehend von dem Zwischenabschnitt (13) desselben einen ersten geraden Abschnitt (10a), der sich von der Achse der Mutter entfernt, einen zweiten Abschnitt (10b), der in die Richtung entgegengesetzt zur Achse der Mutter gekrümmt ist, im Eingriff in einen entsprechenden Bereich (8, 9) der Plattenmutter (6), und einen dritten Abschnitt (10c), der in Richtung der Achse der Mutter zurückgebogen ist, zeigt.

5. Vorrichtung nach Anspruch 4, dadurch gekennzeichnet, daß der dritto Abschnitt (10c) jedes Schenkels (10, 11) des Mitnahmeteils (12) fast um 90° in bezug auf das entsprechende Ende des zweiten Abschnitts (10b) desselben zurückgebogen ist.

6. Vorrichtung nach einem der vorangehenden Ansprüche, dadurch gekennzeichnet, daß die Plattenmutter (6) und das Mitnahmeteil (12) durch Ausschneiden und Tiefziehen von Blechplatten hergestellt sind.
